# EUROPÄISCHE PATENTSCHRIFT

(11) **EP 3 665 064 B1**
(45) Veröffentlichungstag und Bekanntmachung des Hinweises auf die Patenterteilung: **29.09.2021**
(21) Anmeldenummer: 18755753.3
(22) Anmeldetag: 08.08.2018
(51) Int. Cl.: B62D 1/19, B62D 1/181

(54) **VERSTELLBARE LENKSÄULE FÜR EIN KRAFTFAHRZEUG MIT ENERGIEABSORPTIONSVORRICHTUNG**
ADJUSTABLE STEERING COLUMN FOR A MOTOR VEHICLE, COMPRISING AN ENERGY ABSORPTION DEVICE
COLONNE DE DIRECTION RÉGLABLE POUR UN VÉHICULE AUTOMOBILE AVEC ARRANGEMENT D'ABSORPTION D'ÉNERGIE

(30) Priorität: 10.08.2017 DE 102017213912
(43) Veröffentlichungstag der Anmeldung: 17.06.2020
(73) Patentinhaber: thyssenkrupp Presta AG, 9492 Eschen (LI); thyssenkrupp AG, 45143 Essen (DE)
(72) Erfinder: RIST, Sascha, 6971 Hard (AT)
(74) Vertreter: thyssenkrupp Intellectual Property GmbH
(86) Internationale Anmeldenummer: PCT/EP2018/071506
(87) Internationale Veröffentlichungsnummer: WO 2019/030283

(56) Entgegenhaltungen:
- WO-A1-2017/125311
- US-A1- 2006 033 321
- US-A1- 2008 229 867
- US-A1- 2016 046 318

## Beschreibung

Die Erfindung betrifft eine verstellbare Lenksäule für ein Kraftfahrzeug nach den Merkmalen des Oberbegriffs des Patentanspruchs 1.

Entsprechend betrifft die Erfindung eine verstellbare Lenksäule für ein Kraftfahrzeug, umfassend eine Stelleinheit zur drehbaren Lagerung einer Lenkwelle um eine Längsachse, sowie eine Trageinheit, in der die Stelleinheit in Richtung der Längsachse der Lenkwelle mittels eines an der Trageinheit angeordneten motorischen Längsverstellantriebs axial verschiebbar gelagert ist, und weiterhin umfassend eine Übertragungseinrichtung, die einerseits mit der Stelleinheit gekoppelt ist und andererseits mit dem Längsverstellantrieb gekoppelt ist, wobei eine Energieabsorptionsvorrichtung vorgesehen ist, die im Fall einer Verschiebung der Stelleinheit gegenüber der Übertragungseinrichtung Energie absorbiert, wobei eine Kopplungseinrichtung vorgesehen ist, die mit der Stelleinheit verbunden ist und die mit der Übertragungseinrichtung verbunden ist, wobei in einem Crashfall, bei dem eine Kraft in Richtung der Längsachse auf die Lenkwelle einwirkt, die einen vorbestimmten Wert überschreitet, die Verbindung der Kopplungseinrichtung mit der Stelleinheit und/oder der Übertragungseinrichtung aufgehoben wird, so dass eine Bewegung zwischen der Stelleinheit und der Übertragungseinrichtung ermöglicht ist,
Eine derartige Lenksäule mit Energieabsorptionsvorrichtung ist aus der US 2015/023 2117 A1 bekannt. Bei der bekannten Lenksäule ist ein wirkungsmäßig zwischen dem Längsverstellungsantrieb und der Energieabsorptionsvorrichtung angeordnetes Kopplungselement zusätzlich mittels Nieten an der Stelleinheit befestigt. Die Nieten dienen als Bypass für die Verstellkräfte, damit im Normalbetrieb die Verstellkräfte nicht über die Energieabsorptionsvorrichtung auf die Stelleinheit übertragen werden, was die Funktion der Energieabsorptionsvorrichtung beeinträchtigen könnte. Wenn aber im Falle eines Fahrzeugcrashs die Stelleinheit infolge einer hohen Aufprallenergie eine starke Axialkraft in Richtung Fahrzeugfront erfährt, scheren die Nietverbindungen zu dem fixierten Kopplungselement ab, so dass es zu einer Axialverschiebung zwischen der Stelleinheit und dem Kopplungselement kommt, die mithilfe der Energieabsorptionsvorrichtung abgebremst wird. Die bekannte Lenksäule hat den Nachteil, dass die Losbrechkraft zum Abscheren der Nietverbindungen auf die Erfordernisse nicht genau eingestellt werden kann.

Aus der WO 2017/125311 A1, der den Oberbegriff des Anspruchs 1 offenbart, oder der US 2016/046318 A1 sind ebenfalls Lenksäulen der eingangs genannten Art bekannt, bei denen die genannten Nachteile vorliegen.

Aufgabe der Erfindung ist es, eine Lenksäule anzugeben, die im Falle eines Fahrzeugcrashs mit einer definierten Losbrechkraft losbricht.

Die erfindungsgemäße Lösung ergibt sich aus den Merkmalen des Anspruchs 1. Vorteilhafte Ausgestaltungsformen sind in den Unteransprüchen beschrieben.

Erfindungsgemäß weist die Kopplungseinrichtung ein stiftförmiges Halteelement mit einem Kopf auf, das in einem Gegenhalter fixiert ist, wobei zwischen dem Gegenhalter und dem Kopf mindestens ein Element angeordnet ist, das fest mit der Übertragungseinrichtung oder der Stelleinheit verbunden ist, wobei eine zweite Dicke aller Elemente, die zwischen dem Gegenhalter und dem Kopf angeordnet sind, im Falle einer Bewegung der Stelleinheit gegenüber der Übertragungseinrichtung kleiner ist, als eine erste Dicke aller Elemente im Falle, wenn die Stelleinheit gegenüber der Übertragungseinrichtung in ihrer Lage zueinander fixiert sind.

Durch die Ausgestaltung der ersten Dicke und der zweiten Dicke aller Elemente die zwischen dem Kopf und dem Gegenhalter angeordnet sind, kann eine jeweils gewünschte Losbrechkraft eingestellt werden, bei deren Überschreiten die Bewegung der Stelleinheit gegenüber der Übertragungseinrichtung ermöglicht ist. In diesem Fall, dem Crashfall, kann die Energieabsorptionsvorrichtung in die Verschiebung eingebrachte Energie aufzehren. Im Fall, dass die Losbrechkraft nicht überschritten wird, also eine Kraft auf die Lenkwelle einwirkt, die unterhalb der jeweils gewünschten Grenze für die Losbrechkraft liegt, ist die Bewegung der Stelleinheit gegenüber der Übertragungseinrichtung blockiert. Dieser Fahrzustand stellt den Normalzustand im Fahrbetrieb des Kraftfahrzeugs dar.

Bevorzugt wird im Crashfall die Verbindung der Kopplungseinrichtung mit der Stelleinheit aufgehoben. Es ist aber denkbar und möglich, die Verbindung der Kopplungseinrichtung mit der Übertragungseinrichtung im Crashfall aufzuheben.

Es kann bevorzugt vorgesehen sein, dass das Langloch der Kopplungseinrichtung in einem der Fahrzeugfront zugewandten vorderen Endabschnitt eines Kopplungselements angeordnet ist und dabei axial parallel zur Längsachse ausgerichteten ist und nach vorne offen ausgebildet ist. , In dieser Ausführungsform ragt das mit der Stelleinheit fest verbundene und von dieser in radialer Richtung abstehende, stiftförmige Halteelement durch das Langloch hindurch, welches einen verbreiterten Kopf aufweist, und das Kopplungselement weist in einem der Fahrzeugfront abgewandten hinteren Bereich des Langlochs einen in radialer Richtung erhöhten Randbereich auf., an dem der Kopf des Halteelements mit Vorspannung anliegt. Durch den erhöhten Randbereich wird die erste Dicke bereitgestellt. Im Normalbetrieb liegt der Kopf des Halteelements vorgespannt auf dem erhöhten Randbereich auf. Im Crashfall erfolgt eine Relativbewegung zwischen dem Halteelement und dem Kopplungselement, so dass die wirkende Haftreibungskraft zwischen dem Kopf des Halteelements und dem erhöhten Randbereich durch die in die Lenkwelle eingetrage Kraft überschritten wird. Der Kopf des Haltelements gleitet dann von dem erhöhten Randbereich herunter, so dass die wirkende Vorspannung reduziert ist, wenn der Kopf von dem erhöhten Randbereich heruntergeglitten ist, da die zweite Dicke der Elemente zwischen dem Kopf und dem Gegenhalter kleiner ist als die erste Dicke die durch den erhöhten Randbereich bereitgestellt ist. Im Normalzustand verhindert die der Vorspannkraft der zwischen dem Kopf und dem Gegenhalter eingespannten Elemente mit der ersten Dicke, die durch den erhöhten Randbereich bereitgestellt ist, das axiale Gleiten des Halteelements in dem Langloch. In der bevorzugten Form mit dem vorne offenen Langloch wird auch insbesondere das Herausgleiten aus dem offenen Ende des Langlochs dadurch im Normalzustand verhindert. Im Crashfall wird jedoch die der Bewegung entgegenwirkende Reibkraft durch das Heruntergleiten des Kopfes des Haltelements von dem erhöhtem Randbereich reduziert und die Relativbewegung entsprechend ermöglicht. Die der Bewegung entgegenwirkende Reibkraft bestimmt sich aus der wirkenden Vorspannkraft, die auch als Normalkraft bezeichnet werden kann, und dem Reibungskoeffizienten.

Die erfindungsgemäße Lösung hat den Vorteil, dass nicht das Halteelement selbst aus seiner Verankerung losgebrochen werden muss. Vielmehr ist das Haltelement mit seinem Kopf und dem Gegenhalter und den zwischen dem Kopf und dem Gegenhalter angeordneten zumindest einem Element mit der ersten Dicke unter Vorspannung, so dass diese relativ zueinander festgeklemmt und reibschlüssig fixiert sind, solange im Normalbetrieb des Fahrzeugs nur die relativ moderaten Verstellkräfte zwischen dem Längsverstellantrieb der Trageinheit, der Übertragungseinrichtung und der Stelleinheit übertragen werden. Wenn aber im Fall eines Fahrzeugcrashs, kurz als Crash bezeichnet, außergewöhnlich hohe Axialkräfte auf die Kopplungseinrichtung einwirken, so dass eine Bewegung der Stelleinheit gegenüber der Übertragungseinrichtung erfolgt und die wirkende Vorspannung zwischen Kopf, Gegenhalter und den zwischen dem Kopf und dem Gegenhalter angeordneten Elementen dadurch reduziert wird, weil die zweite Dicke der Elemente zwischen Kopf und Gegenhalter kleiner ist als die erste Dicke der Elemente zwischen Kopf und Gegenhalter.

In einer bevorzugten Ausführungsform in der die erste Dicke durch einen erhöhten Randbereich bereitgestellt ist, rutscht das Haltelement vom erhöhten Randbereich des Kopplungselements der Kopplungseinrichtung ab und bewegt sich in Richtung der Längsachse. Nach dem Abrutschen vom erhöhten Randbereich fällt die Vorspannung und der Reibschluss zwischen dem Haltelement und dem Kopplungselement weg oder ist zumindest deutlich reduziert, so dass sich das Halteelement im Wesentlichen frei durch das Langloch und bevorzugt aus dessen offenem Ende hinaus bewegen kann.

In einer vorteilhaften Weiterbildung ist die zweiten Dicke kleiner als das 0,9-fache der ersten Dicke ist. Dadurch kann eine deutliche Absenkung der wirkenden Vorspannkraft zwischen Kopf, Gegenhalter und den zwischen dem Kopf und dem Gegenhalter angeordneten Elementen erreicht werden.

Bevorzugt weist die Differenz zwischen der ersten Dicke und der zweiten Dicke einen Wert von mindestens 0,1mm, besonders bevorzugt 0,2mm und ganz besonders bevorzugt 0,3mm auf.

In einer speziellen Ausführungsform der Erfindung kann es vorgesehen sein, dass die zweite Dicke der Elemente zwischen Kopf und Gegenhalter 0mm beträgt. Dies wäre beispielsweise der Fall, wenn das Halteelement aus dem Langloch herausgeglitten ist und somit kein Element bzw. keine Elemente zwischen dem Kopf und dem Gegenhalter angeordnet sind oder ein Element zwischen Kopf und Gegenhalter beim Einsetzen der Bewegung zwischen Stelleinheit und Übertragungseinrichtung in geometrisch unbestimmte Einzelteile aufgelöst wird und somit aus dem Bereich zwischen Kopf und Gegenhalter herausfällt.

Eine vorteilhafte Ausgestaltung der Erfindung sieht vor, dass das stiftförmige Halteelement als Niet, Bolzen oder Schraube ausgestaltet ist. Hierbei handelt es sich um einfache und kostengünstige Standardbauteile, die auf bekannte Weise an der Stelleinheit befestigt werden können.

Unter einem Bolzen werden nicht nur Bolzen mit kreiszylindrischer Grundfläche verstanden, sondern die Grundfläche des Bolzens kann jede beliebige Grundfläche aufweisen. Jedoch ist ein Bolzen mit einer kreiszylindrischer Grundfläche als bevorzugte Ausführungsform anzusehen.

In vorteilhafter Ausgestaltung weist die Stelleinheit eine Bohrung zur Befestigung des Niets oder eine Gewindebohrung zum Einschrauben einer Schraube oder eine Bohrung zum Einpressen des Bolzens auf.

In Ausgestaltung der Erfindung mit einer Schraube wird eine gewünschte Vorspannkraft durch ein passendes Anzugsmoment der Schraube erzeugt. Mit Vorteil kann hierdurch das Anzugsmoment so vorgewählt werden , dass für die Überwindung der Klemmverbindung eine vorher definierte Losbrechkraft erforderlich ist, da durch das Anzugsmoment die wirkenden Vorspannung zwischen Kopf, Gegenhalter und dem zwischen Kopf und Gegenhalt angeordneten Element bzw. Elementen eingestellt wird.

In bevorzugter Ausgestaltung der Erfindung wird im Crashfall die Verbindung der Kopplungseinrichtung mit der Stelleinheit aufgehoben, wobei die Energieabsorptionsvorrichtung mindestens einen Biegedraht aufweist, dessen erstes Ende mit der Stelleinheit und dessen zweites Ende mit der Kopplungseinrichtung verbunden ist. Wenn im Falle eines Fahrzeugcrashs die Stelleinheit gegenüber der Übertragungseinrichtung axial verschoben wird, wird der Biegedraht deformiert oder mit anderen Worten verbogen, wobei er einen Teil der Aufprallenergie absorbiert und die axial Verschiebung der Stelleneinheit abbremst.

In weiterer vorteilhafter Ausgestaltung weist die Energieabsorptionsvorrichtung einen zweiten Biegedraht auf, dessen erstes Ende mit der Stelleinheit und dessen zweites Ende über eine mittels eines pyrotechnischen Schalters lösbare Schaltverbindung mit der Kopplungseinrichtung verbunden ist. Ist die Schaltverbindung eingeschaltet, so ist im Falle eines Fahrzeugcrashs die Kopplungseinrichtung mit beiden Biegedrähten verbunden, so dass beide Biegedrähte verbogen werden und Aufprallenergie absorbieren. Dies führt zu einer stärkeren Abbremsung der Stelleinheit als in dem ersten Fall, in dem nur ein Biegedraht aktiviert war. Sollte eine zentrale Steuereinheit des Fahrzeugs jedoch feststellen, dass aufgrund bestimmter Umstände eine geringere Abbremsung vorteilhafter wäre, betätigt sie den pyrotechnischen Schalter, wobei die Verbindung zwischen dem zweiten Biegedraht und der Kopplungseinrichtung unterbrochen wird. Dies hat zur Folge, dass nur der erste Biegedraht verbogen und die insgesamt absorbierte Energie halbiert wird. Die Folge ist eine geringere Abbremsung der Stelleinheit.

Alternativ ist es möglich, dass im Crashfall die Verbindung der Kopplungseinrichtung mit der Übertragungseinrichtung aufgehoben wird, wobei die Energieabsorptionsvorrichtung mindestens einen Biegedraht aufweist, dessen erstes Ende mit der Übertragungseinrichtung und dessen zweites Ende mit dem Kopplungseinrichtung verbunden ist. Wenn im Falle eines Fahrzeugcrashs die Stelleinheit gegenüber der an der Trageinheit fixierten Kopplungseinrichtung axial verschoben wird, wird der Biegedraht verbogen, wobei er einen Teil der Aufprallenergie absorbiert und die axiale Verschiebung der Stelleneinheit abbremst. Es können auch entsprechend zwei Biegedrähte vorgesehen sein, analog zu der oben genannten Ausführungsform.

In einer weiteren vorteilhaften Ausführungsform der Erfindung ist vorgesehen, dass der Längsverstellantrieb einen Spindeltrieb mit einer auf einer Spindel axial verschiebbaren Spindelmutter aufweist und dass ein mit der Spindelmutter verbundenes Übertragungselement zusammen mit dem Kopplungselement als einstückiges, integrales Bauteil ausgebildet ist. Hierdurch werden die Zahl der Bauteile und die damit verbundenen Montagekosten reduziert.

Ausführungsbeispiele der Erfindung werden nachfolgend anhand der Zeichnungen näher erläutert. Die Figuren zeigen im Einzelnen:
- Figur 1:: eine perspektivische Ansicht einer erfindungsgemäßen Lenksäule im einbaufertigen Zustand;
- Figur 2:: eine perspektivische Darstellung einer Stelleinheit der Lenksäule von Figur 1 in Verbindung mit einem Längsverstellantrieb;
- Figur 3:: eine Seitenansicht der Stelleinheit mit Energieabsorptionsvorrichtung;
- Figur 4:: eine Explosionsdarstellung der Stelleinheit mit Längsverstellantrieb;
- Figur 5:: ein vergrößertes Detail aus Figur 4;
- Figur 6:: eine geschnittene Teilansicht der Stelleinheit mit Längsverstellantrieb von oben;
- Figur 7:: ein vergrößertes Detail aus Figur 6 eines mittels Niet an der Stelleeinheit befestigten Kopplungselements, wobei der Kopf mit Vorspannung am Kopplungselement festgeklemmt ist, vor dem Losbrechen des Niets;
- Figur 8:: das vergrößerte Detail von Figur 7 nach dem Losbrechen des Niets im Falle eines Fahrzeugcrashs;
- Figur 9:: eine vergrößerte Detailansicht ähnlich Figur 7, jedoch in einer zweiten Ausführungsform mit einem Halteelement in Form einer Schraube, die in einer Gewindebohrung der Stelleinheit eingeschraubt ist;
- Figur 10:: eine vergrößerte Detailansicht ähnlich Figur 9, jedoch in einer dritten Ausführungsform mit einem Halteelement in Form einer Schraube, die in einer Gewindebohrung der Stelleinheit eingeschraubt ist und einer Scheibe als weiteres Element zwischen dem Kopf und dem Gegenhalter,
- Figur 11:: das vergrößerte Detail der dritten Ausführungsform von Figur 10 nach dem Losbrechen des Halteelements im Falle eines Fahrzeugcrashs;
- Figur 12:: eine vergrößerte Detailansicht ähnlich Figur 10, jedoch in einer vierten Ausführungsform mit einem Halteelement in Form einer Schraube, die in einer Gewindebohrung der Stelleinheit eingeschraubt ist und einer zerbrechbaren Scheibe als weiteres Element zwischen dem Kopf und dem Gegenhalter,
- Figur 13:: das vergrößerte Detail der vierten Ausführungsform von Figur 12 nach dem Losbrechen des Halteelements und dem Zerbrechen der Scheibe im Falle eines Fahrzeugcrashs.

Eine elektrisch verstellbare Lenksäule für ein Kraftfahrzeug umfasst eine Lenkwelle 2, die um eine Längsachse 7 drehbar in einer Stelleinheit 3 gelagert ist. Die Stelleinheit 3 ist ihrerseits entlang der Längsachse 7 verschiebbar in einer Trageinheit 4 gelagert. Die Trageinheit 4 ist im Beispiel wiederum in einem mit dem nicht gezeigten Fahrzeugchassis fest verbundenen Halter 5 schwenkbar gelagert, wodurch eine Höhenverstellung der Lenkwelle 2 ermöglicht wird. Die Erfindung ist dabei jedoch auch anwendbar auf Lenksäulen, die in ihrer Höhe nicht verstellbar sind.

Für die Höhenverstellung ist ein elektrischer Höhenverstellantrieb 6 vorgesehen, der nicht weiter erläutert wird.

Ein elektrischer Längsverstellungsantrieb 8 ist an der Trageinheit 4 angeordnet. Der Längsverstellungsantrieb 8 weist einen Elektromotor 9 und ein Getriebe 10 auf, welches mit einer Spindel 11 verbunden ist. Der Elektromotor 9 treibt über das Getriebe 10 die Spindel 11 an. Die Spindel 11 ist entlang der Längsachse 7 ausgerichtet. Auf der Spindel 11 sitzt eine Spindelmutter 12, die durch Drehen der Spindel 11 mittels des Elektromotors 9 entlang der Längsachse 7 hin- und her verschoben werden kann. Die Spindelmutter 12 ist mit der Übertragungseinrichtung in Form eines Übertragungselements 13 verbunden, welches mittels zweier Befestigungsschrauben 14, 15 mit einem in Richtung der Längsachse 7 ausgerichteten Kopplungselement 16 der Kopplungseinrichtung in Bohrungen 161 beziehungsweise 162 verschraubt ist. Am Kopplungselement 16 ist ein Einsteckteil 17 befestigt, welches zwei in radialer Richtung quer zur Längsachse 7 ausgerichtete Fixierelemente 18, 19 aufweist, die zwischen sich ein um etwa 270° umgebogenes rundes Ende 201 eines ersten Biegedrahtes 20 aufnehmen.

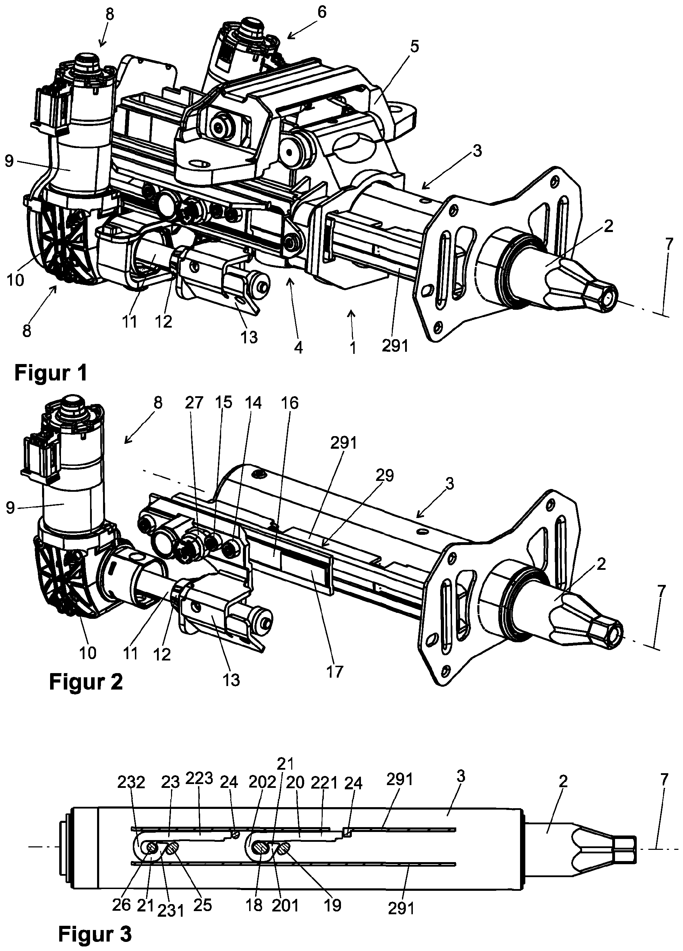

Wie man am besten in Figur 3 erkennt, ist die Stelleinheit 3 mit zwei Biegedrähten 20, 23 ausgestattet, die jeweils ein erstes, gerades Ende 221, 223 und ein zweites, rundes Ende 201, 231 aufweisen. Die geraden Enden 221, 223 liegen jeweils an einem Anschlag 24 einer Führungsschiene 291 der Stelleinheit 3 an. Die Führungsschiene 291 ist fest und unlösbar mit der Stelleinheit 3 verbunden. Die Anschläge 24 stellen sicher, dass bei einer Verschiebung der Stelleinheit 3 infolge eines Fahrzeugcrashs die jeweiligen geraden Enden 221, 223 der Biegedrähte 20, 23 zusammen mit der Stelleinheit 3 bewegt werden. Dabei bleibt der Befestigungsabschnitt 201 des runden Endes 21 des ersten Biegedrahts 20 zwischen den beiden Fixierelementen 18, 19 an der Kopplungseinrichtung und damit am Kopplungselement 16 und damit gegenüber der Übertragungseinrichtung unverrückbar fixiert, so dass der erste Biegedraht 20 im jeweiligen Biegeabschnitt 202 verbogen wird und dabei Aufprallenergie absorbiert.

Der Befestigungsabschnitt 231 des runden Endes 21 des zweiten Biegedrahtes 23 ist in der Darstellung von Figur 3 ebenfalls zwischen zwei Fixierelementen 25, 26 eingeklemmt, wobei jedoch nur das eine Fixerelement 25 fest mit dem Kopplungselement 16 eingebaut ist. Das andere Fixierelement 26 ist als bewegliches Fixerelement ausgestaltet. Es hat die Form eines Stiftes, der aus einem pyrotechnischen Schalter 27 herausragt. Der pyrotechnische Schaltet 27 ist auf dem Übertragungselement 13 montiert und mittels einer Befestigungsschraube 28 befestigt.

Im Falle eines Fahrzeugcrashs gibt es nun zwei Möglichkeiten:
Ist das bewegliche Fixierelement 26 in der Figur gezeigten Position, so ist der Befestigungsabschnitt 231 des runden Endes 21 des zweiten Biegedrahts 23 zwischen den Fixierelementen 25, 26 eingeklemmt und fixiert. Dies bedeutet, dass die im Falle eines Fahrzeugcrashs entlang der Längsachse 7 nach links verschobene Stelleinheit 3 beide Biegedrähte 20, 23 verbiegt, wobei von der Aufprallenergie einen größerer Teil, der zur Verbiegung von zwei Biegedrähten 20, 23 erforderlich ist, absorbiert wird.

Wenn im anderen Fall eine nicht gezeigte zentrale Steuerungselektronik aufgrund von ausgewerteten Sensoreingaben entscheidet, dass weniger Aufprallenergie zu absorbieren ist, betätigt sie den pyrotechnischen Schalter 27, der daraufhin in Sekundenbruchteilen das bewegliche Fixierelement 26 außer Eingriff mit dem zweiten Biegedraht 23 bringt. Bei einer Verschiebung der Stelleinheit 3 gegenüber der Übertragungseinrichtung wird der zweite Biegedraht 23 lediglich mit verschoben, ohne sich jedoch zu verbiegen. Aufprallenergie wird allein im ersten Biegedraht 20 absorbiert, wodurch der Betrag an absorbierter Energie geringer ausfällt als im ersten Fall.

Auch wenn im gezeigten Ausführungsbeispiel das Übertragungselement 13 und das Kupplungselement 16 als zwei separate, mittels der Befestigungsschrauben 14, 15 miteinander verschraubte Bauteile dargestellt sind, kann es im Hinblick auf eine weniger aufwändige Montage vorteilhaft sein, das Übertragungselement 13 und das Kopplungselement 16 als einstückiges integrales Bauteil auszubilden.

Die Biegedrähte 20, 23 bilden mit ihren Anschlägen 24 an der Führungsschiene 291 der Stelleinheit 3 und ihren Fixierelementen 18, 19, 25, 26 sowie dem pyrotechnischen Schalter 27 eine schaltbare Energieabsorptionsvorrichtung 29, die je nach Anforderung der jeweiligen Crashsituation zwei verschiedene Teilbeträge der Aufprallenergie absorbieren kann.

Um zu vermeiden, dass die für die Längsverstellung durch den Längsverstellantrieb 8 von der Tageinheit 4 über die Übertragungseinrichtung auf die Stelleinheit 3 übertragenden Verstellkräfte im Normalbetrieb nicht oder zumindest nur teilweise über die Energieabsorptionsvorrichtung 29 übertragen werden und zur Vermeidung einer dadurch bedingten Beeinträchtigung der Funktion der Energieabsorptionsvorrichtung 29 ist vorgesehen, dass die Kopplungseinrichtung ein stiftförmiges Halteelement 33, 34 mit einem Kopf 37, 42 aufweist, das in einem Gegenhalter 36, 360 fixiert ist, wobei zwischen dem Gegenhalter 36, 360 und dem Kopf 37, 42 mindestens ein Element angeordnet ist, das fest mit der als Übertragungselement 13 ausgebildeten Übertragungseinrichtung oder der Stelleinheit 3 verbunden ist, wobei eine zweite Dicke d aller Elemente, die zwischen dem Gegenhalter 36, 360 und dem Kopf 37, 42 angeordnet sind, im Falle einer Bewegung der Stelleinheit 3 gegenüber der durch die als Übertragungselement 13 ausgebildete Übertragungseinrichtung kleiner ist, als eine erste Dicke D aller Elemente im Falle, wenn die Stelleinheit 3 gegenüber der Übertragungseinrichtung in ihrer Lage zueinander fixiert sind, wie dies im Normalbetrieb der Fall ist.

Infolge des selbsthemmenden Spindeltriebs 11, 12 kann das mit dem Kopplungselement 16 fest verbundene Übertragungselement 13 mit der Spindelmutter 12 bei Stillstand des Elektromotors 9 und der Spindel 11 nicht mehr in Richtung der Längsachse 7 auf der Spindel 11 verschoben werden. Mithilfe der erfindungsgemäßen Kopplungseinrichtung ist im Normalbetrieb die Stelleinheit 3 fest mit dem Kopplungselement 16 der Kopplungseinrichtung und der Übertragungseinrichtung mittels des stiftförmigen Halteelements 36, 360 verbunden und kann daher ebenso wenig in Richtung der Längsachse 7 verschoben werden. Die erfindungsgemäße Kopplungseinrichtung ist jedoch so ausgestaltet, dass diese zwar stabil genug ist, um die mäßig starken Längsverstellkräfte zu übertragen, aber unter den sehr hohen axialen Kräften, die nur im Falle eines Fahrzeugcrashs auftreten, bei Überschreiten einer definierten Kraftschwelle (auch als Grenze, Grenzwert oder Losbrechkraft bezeichnet) aufgebrochen wird, so dass sich die Stelleinheit 3 relativ zum Kopplungselement 16, welches mit der Übertragungseinrichtung verbunden ist, in Richtung der Längsachse 7 verschiebt, wobei ein Teil der Aufprallenergie durch die Energieabsorptionsvorrichtung 29 absorbiert wird.

Zur Realisierung einer derartigen Kopplungseinrichtung ist das Kopplungselement 16 an seinem der Fahrzeugfront zugewandten Endabschnitt mit einem axial ausgerichteten, nach vorn offenen Langloch 32 versehen, durch das ein stiftförmiges Halteelement 33, 34 quer hindurchragt, und weist einen Schaftabschnitt und einen gegenüber diesem Schaftabschnitt 330, 340 verbreiterten Kopf 37, 42 auf. Das Halteelement kann als Niet 33 oder als Schraube 34 ausgestaltet sein.

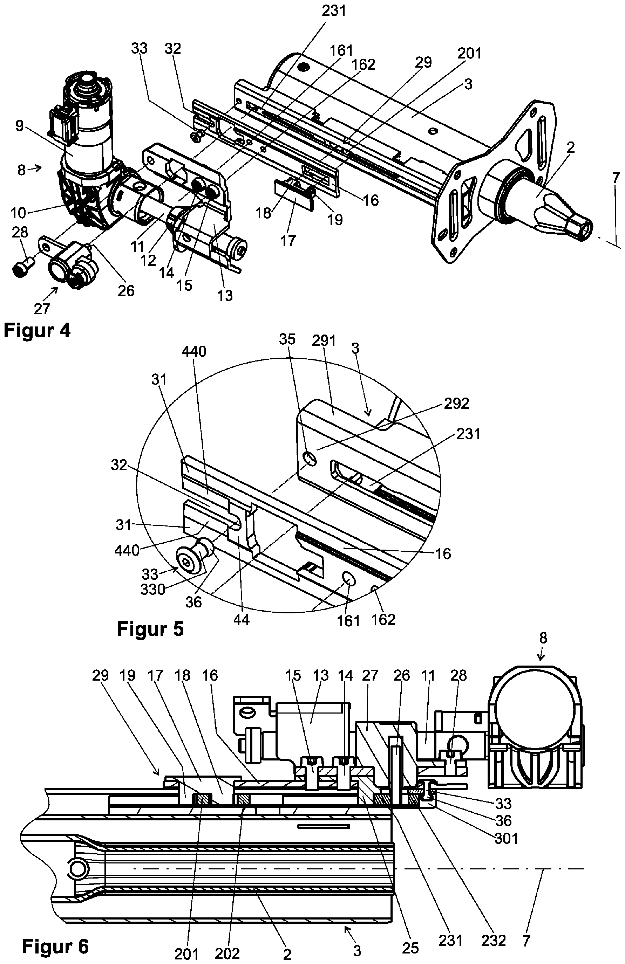

In den Figuren 1 bis 8 ist ein erstes Ausführungsbeispiel dargestellt, wobei das Halteelement als Niet ausgebildet ist. Der Niet 33 ist mit der Stelleinheit 3 fest verbunden, indem der Niet 33 durch eine Bohrung 35 der Führungsschiene 291 der Stelleinheit 3 hindurchragt und am Ausgang der Bohrung 35 mittels eines als verdicktes Ende ausgebildeten Gegenhalters 36 verankert ist. Der Gegenhalter 36 kann wie in diesem Ausführungsbeispiel mit dem als Niet ausgebildeten Halteelement 33 ein einstückiges integrales Bauteil bilden. Somit ist der Niet 33 als Haltelement 33 in dem Gegenhalter 36 fixiert, so dass der Niet sich nicht relativ gegenüber dem Gegenhalter 36 bewegen kann. Der Gegenhalter 36 ist somit zwischen der äußeren Wand 292 der Führungsschiene 291 und dem mantelförmigen Rohrabschnitt der Stelleinheit 3 angeordnet. An seinem anderen Ende ist der Niet 33 mit einem Kopf 37 versehen, der an der gegenüberliegenden Seite des Kopplungselements 16 an einem erhöhten Randbereich 44 vorgespannt anliegt, wobei der Kopf 37 das Langloch 32 seitlich teilweise überragt. Somit weist das Kopplungselement 16 der Kopplungseinrichtung das Langloch 32 auf, welches durch einen Randbereich 44, 440 begrenzt ist, wobei der Randbereich 44,440 einen lokalen erhöhten Randbereich 44 aufweist. Zwischen dem Kopf 37 und dem Gegenhalter 36 ist das Kopplungselement 16 und die äußere Wand 292 der Führungsschiene 291 angeordnet, so dass in diesem Ausführungsbeispiel die erfindungsgemäßen Elemente zwischen dem Kopf 37 und dem Gegenhalter 36 durch das Kopplungselement 16 und die äußere Wand der Führungsschiene gebildet sind. Somit weisen die Elemente zwischen dem Kopf 37 und dem Gegenhalter 36 im Bereich des erhöhten Randbereichs 44 eine erste Dicke D auf und außerhalb des erhöhten Randbereichs weisen die Elemente eine zweite Dicke d auf, wobei die zweite Dicke d kleiner ist als die erste Dicke D.

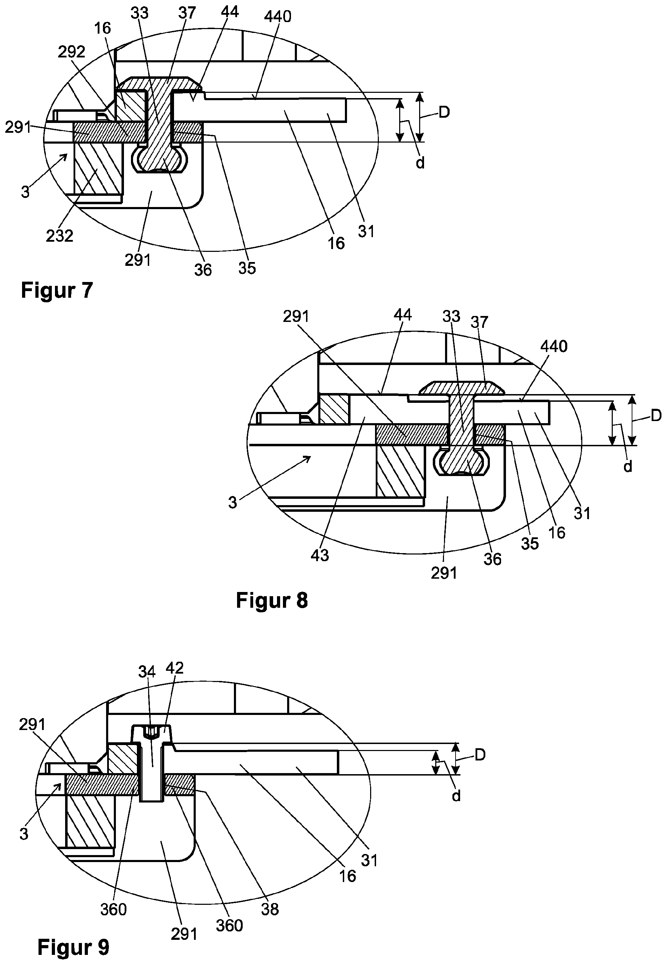

In der Figur 7 ist die Position des Niets 33 im Normalbetrieb besonders anschaulich dargestellt. Der Nietkopf 37 liegt auf dem erhöhten Randbereich 44 des Kopplungselements 16 auf, so dass die Elemente zwischen dem Kopf 37 und dem Gegenhalter 36 die erste Dicke D aufweisen. Der Niet 33 drückt das Kopplungselement 16 und die äußere Wand 292 der Führungsschiene 291 zusammen, so dass die Elemente zwischen dem Kopf 37 und dem Gegenhalter 36 auf Druck belastet sind und der Niet 33 selber auf Zug belastet ist, wie dies dem Fachmann aus dem Verspannungsschaubild bekannt ist.

Somit ist der Niet 33 derart vernietet, dass sein Kopf 37 mit Vorspannung am erhöhten Randbereich 44 anliegt. Dadurch wird ein Herrunterrutschen des als Halteelement ausgebildeten Niets 33 von dem erhöhten Randbereich 44 verhindern, denn durch die Vorspannung entsteht ein Reibschluss zwischen dem Haltelement 33, der äußeren Wand 292 und dem Kopplungselement 16, welche eine Klemmverbindung bilden. Diese ist stabil, solange im Normalbetrieb des Fahrzeugs nur die relativ moderaten Verstellkräfte zwischen dem Längsverstellantrieb 8 der Trageinheit 4, der Übertragungseinrichtung und der Stelleinheit 3 übertragen werden.

Wenn aber im Fall eines Fahrzeugcrashs außergewöhnlich hohe Axialkräfte auf die Kopplungseinrichtung einwirken, die einen vorbestimmten Wert überschreiten, rutscht das als Niet ausgebildete Haltelement 33 vom erhöhten Randbereich 44 des Kopplungselements 16 ab und bewegt sich axial in Richtung der Längsachse 7 des offenen Endes des Langlochs 32 zusammen mit der Stelleinheit 3. Die zwischen der Stelleinheit 3 und der Übertragungseinrichtung angeordnete Energieabsorptionsvorrichtung 29 absorbiert zumindest einen Teil der über die Lenkwelle 2 eingetragenen Energie.

In der Figur 8 ist eine Position des Niets 33 während des Crashfalls dargestellt. Der Kopf 37 hat sich vom erhöhten Randbereich 44 des Kopplungselement 16 entfernt, so dass nun die Elemente zwischen dem Kopf 37 und dem Gegenhalter 36 die zweite Dicke d aufweisen, so dass die Elemente zwischen dem Kopf 37 und dem Gegenhalter 36 nur noch mit einer geringen Kraft belastet oder belastungsfrei sind. Es tritt somit bei der Bewegung der Stelleinheit 3 gegenüber der Übertragungseinrichtung im Crashfall ein gezielter Vorspannkraftverlust in den Elementen zwischen dem Kopf 37 und dem Gegenhalter 36 ein.

Mit anderen Worten fällt nach dem Abrutschen vom erhöhten Randbereich 44 die Vorspannung und der Reibschluss zwischen dem als Niet ausgebildeten Haltelement 33und dem Kopplungselement 16 weg, so dass sich das Halteelement 33 im Wesentlichen frei durch das Langloch 32 und aus dessen offenem Ende hinaus bewegen kann.

In der Figur 9 ist eine zweite Ausführungsform der Erfindung dargestellt. Das Halteelement 34 ist als Schraube 34 mit einem Kopf 42 ausgebildet. Der Gegenhalter 360 ist in dieser Ausführungsform durch die äußere Wand 292 der Führungsschiene 291 gebildet, wobei die äußere Wand eine Bohrung 38 aufweist. Diese kann ein Gewinde umfassen, welches korrespondierend zu dem Gewinde der Schraube 34 ausgebildet ist. Alternativ kann es vorgesehen sein, dass die Schraube 34 beim Einschrauben in die Bohrung 38 ein Gewinde einschneidet. Solche Schrauben werden als selbstschneidende Schrauben bezeichnet.

Das Kopplungselement 16 der Kopplungseinrichtung weist das Langloch 32 auf, welches durch einen Randbereich 44, 440 begrenzt ist, wobei der Randbereich 44, 440 einen lokalen erhöhten Randbereich 44 aufweist. Zwischen dem Kopf 42 und dem Gegenhalter 360, welcher durch die äußere Wand 292 der Führungsschiene 291 gebildet ist, ist das Kopplungselement 16 angeordnet, so dass in diesem Ausführungsbeispiel das erfindungsgemäße zumindest eine Element zwischen dem Kopf 42 und dem Gegenhalter 360 durch das Kopplungselement 16 gebildet ist. Somit weist das Element zwischen dem Kopf 42 und dem Gegenhalter 360 im Bereich des erhöhten Randbereichs 44 eine erste Dicke D auf und ausserhalb des erhöhten Randbereichs 44 weist das Element eine zweite Dicke d auf, wobei die zweite Dicke d kleiner ist als die erste Dicke D. In der Figur 9 ist die Position der Schraube 34 im Normalbetrieb dargestellt. Der Kopf 42 liegt auf dem erhöhten Randbereich 44 des Kopplungselement 16 auf, so dass das Element, welches in diesem Fall dem Kopplungselement 16 entspricht, zwischen dem Kopf 42 und dem Gegenhalter 360 die erste Dicke D aufweisen. Die Schraube 34 drückt das Kopplungselement 16 zusammen, so dass das Kopplungselement 16 zwischen dem Kopf 42 und dem Gegenhalter 360 auf Druck belastet ist und die Schraube 34 selber auf Zug belastet ist.

Wenn im Fall eines Fahrzeugcrashs außergewöhnlich hohe Axialkräfte auf die Kopplungseinrichtung einwirken, die einen vorbestimmten Wert überschreiten, rutscht das als Schraube ausgebildete Haltelement 34 vom erhöhten Randbereich 44 des Kopplungselements 16 ab und bewegt sich axial in Richtung des offenen Endes des Langlochs 32. Der Kopf 42 hat sich vom erhöhten Randbereich 44 des Kopplungselement 16 entfernt, so dass nun das Element zwischen dem Kopf 37 und dem Gegenhalter 360, also in diesem Fall das Kopplungselement 16, die zweite Dicke d aufweist, so dass das Element zwischen dem Kopf 42 und dem Gegenhalter 360 nur noch mit einer geringen Kraft belastet ist oder Belastungsfrei ist. Es tritt somit bei der Bewegung der Stelleinheit 3 gegenüber der Übertragungseinrichtung im Crashfall ein gezielter Vorspannkraftverlust in dem Element zwischen dem Kopf 42 und dem Gegenhalter 360 ein.

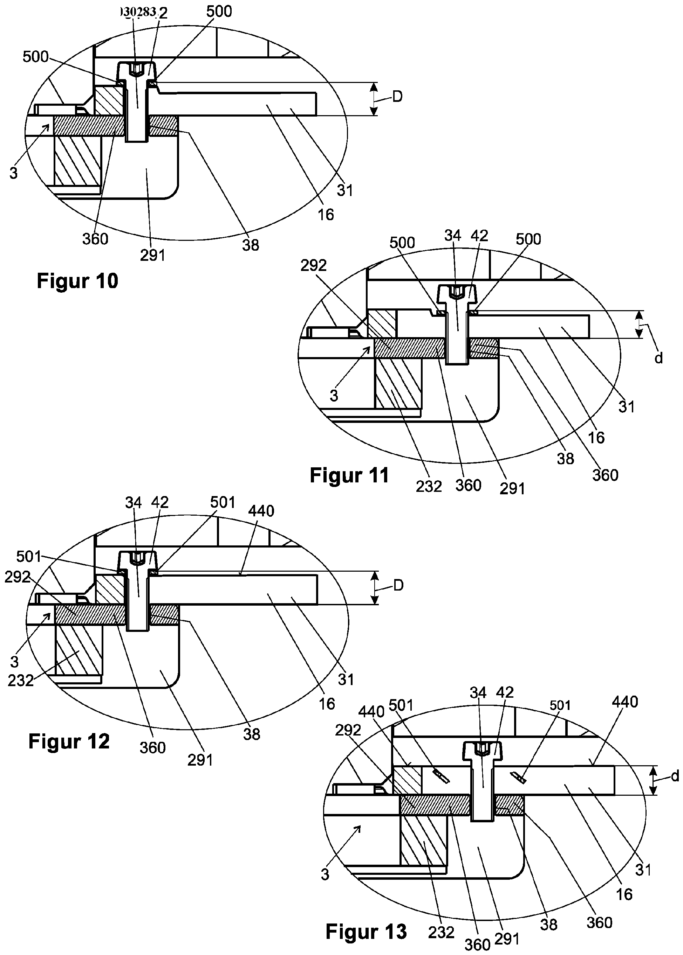

In den Figuren 10 und 11 ist eine dritte Ausführungsform der Erfindung dargestellt, die ähnlich wie die zweiten Ausführungsform ausgebildet ist. Das Halteelement 34 ist als Schraube 34 mit einem Kopf 42 ausgebildet. Der Gegenhalter 360 ist in dieser Ausführungsform durch die äußere Wand 292 der Führungsschiene 291 gebildet, wobei die äußere Wand eine Bohrung 38 aufweist, die mit der Schraube 34 gekoppelt ist.

Zwischen dem Kopf 42 und dem Gegenhalter 360, welcher durch die äußere Wand 292 der Führungsschiene 291 gebildet ist, ist das Kopplungselement 16 und eine Scheibe 500 angeordnet, so dass in diesem Ausführungsbeispiel die erfindungsgemäßen Elemente zwischen dem Kopf 42 und dem Gegenhalter 360 durch das Kopplungselement 16 und die Scheibe 500 gebildet sind. Somit weisen die Elemente zwischen dem Kopf 42 und dem Gegenhalter 360 im Bereich des erhöhten Randbereichs 44 eine erste Dicke D auf und ausserhalb des erhöhten Randbereichs 44 weisen diese Elemente eine zweite Dicke d auf, wobei die zweite Dicke d kleiner ist als die erste Dicke D. In der Figur 10 ist die Position der Schraube 34 im Normalbetrieb und in der Figur 11 die Position der Schraube 34 und der Scheibe 500 während des Crashfalls dargestellt. Die Scheibe 500 kann zur Erhöhung der der Bewegung entgegengesetzten Reibkraft dienen und weist dafür eine reibungserhöhenden Beschichtung und/oder eine erhöhte Rauigkeit auf. Die Funktion der in den Figuren 10 und 11 dargestellten Ausführungsform entspricht der der ersten und zweiten Ausführungsform.

In den Figuren 12 und 13 ist eine vierte Ausführungsform der Erfindung dargestellt, die ähnlich wie die dritte Ausführungsform ausgebildet ist. Das Halteelement 34 ist als Schraube 34 mit einem Kopf 42 ausgebildet. Der Gegenhalter 360 ist auch in dieser Ausführungsform durch die äußere Wand 292 der Führungsschiene 291 gebildet, wobei die äußere Wand 292 eine Bohrung 38 aufweist, die mit der Schraube 34 gekoppelt ist.

Zwischen dem Kopf 42 und dem Gegenhalter 360, welcher durch die äußere Wand 292 der Führungsschiene 291 gebildet ist, ist das Kopplungselement 16 und eine Scheibe 501 angeordnet, so dass in diesem Ausführungsbeispiel die erfindungsgemäßen Elemente im Normalbetrieb zwischen dem Kopf 42 und dem Gegenhalter 360 durch das Kopplungselement 16 und die Scheibe 501 gebildet ist. Das Kopplungselement 16 der Kopplungseinrichtung ist eben ausgebildet, somit weist das Kopplungselement 16 in dieser Ausführungsform keinen erhöhten Randbereich auf, sondern lediglich den ebenen Randbereich 440. Somit weisen die Elemente zwischen dem Kopf 42 und dem Gegenhalter 360 im Normalbetrieb eine erste Dicke D auf. Im Crashfall wird die Scheibe 501 zerstört und durch die Bewegung der Stelleinheit 3 gegenüber der Übertragungseinrichtung aus dem Bereich zwischen dem Kopf 42 und dem Gegenhalter 360 herausbewegt, so dass das Element im Crashfall eine zweite Dicke d aufweist, wobei die zweite Dicke d kleiner ist als die erste Dicke D. Im Crashfall ist somit die Anzahl der Elemente zwischen dem Kopf 42 und dem Gegenhalter 360 reduziert. In der Figur 12 ist die Position der Schraube 34 im Normalbetrieb und in der Figur 13 die Position der Schraube 34 und der Fragmente der Scheibe 501 während des Crashfalls dargestellt. Bevorzugt ist die Scheibe 501 aus einem spröden Werkstoff, aus einem Elastomer oder einem Hartgewebe gebildet. Die Funktion der in den Figuren 13 und 14 dargestellten Ausführungsform entspricht der der ersten, zweiten und dritten Ausführungsform.

Zum Losbrechen der Klemmverbindung ist eine Axialkraft erforderlich, die größer als die größte im Normalbetrieb auftretende Verstellkraft ist. Andererseits darf die erforderliche Losbrechkraft nicht so groß sein, dass im Falle eines Fahrzeugcrashs die Energieabsorptionsvorrichtung nicht aktiviert wird. Die erfindungsgemäße Kopplungseinrichtung hat den Vorteil, dass die Losbrechkraft durch geeignete Wahl der Vorspannkraft zwischen dem jeweiligen Haltelement 33, 34 und dem erhöhten Randbereich 44 des Kopplungselements 16 der Kopplungseinrichtung einstellbar ist.

Mit der Erfindung wurde eine längsverstellbare Lenksäule mit Energieabsorptionsvorrichtung geschaffen, die einfach aufgebaut ist und bei der die im Crashfall erforderliche Losbrechkraft zur Aktivierung der Energieabsorptionsvorrichtung konstruktionsmäßig gut einstellbar ist.

## Patentansprüche

1. Verstellbare Lenksäule (1) für ein Kraftfahrzeug, umfassend eine Stelleinheit (3) zur drehbaren Lagerung einer Lenkwelle (2) um eine Längsachse (7), sowie eine Trageinheit (4), in der die Stelleinheit (3) in Richtung der Längsachse (7) der Lenkwelle (2) mittels eines an der Trageinheit (4) angeordneten motorischen Längsverstellantriebs (8) axial verschiebbar gelagert ist, und weiterhin umfassend eine Übertragungseinrichtung, die einerseits mit der Stelleinheit (3) gekoppelt ist und andererseits mit dem Längsverstellantrieb (8) gekoppelt ist, wobei eine Energieabsorptionsvorrichtung (29) vorgesehen ist, die im Fall einer Verschiebung der Stelleinheit (3) gegenüber der Übertragungseinrichtung Energie absorbiert, wobei eine Kopplungseinrichtung vorgesehen ist, die mit der Stelleinheit (3) verbunden ist und die mit der Übertragungseinrichtung verbunden ist, wobei in einem Crashfall, bei dem eine Kraft in Richtung der Längsachse (7) auf die Lenkwelle (2) einwirkt, die einen vorbestimmten Wert überschreitet, die Verbindung der Kopplungseinrichtung mit der Stelleinheit (3) und/oder der Übertragungseinrichtung aufgehoben wird, so dass eine Bewegung zwischen der Stelleinheit (3) und der Übertragungseinrichtung ermöglicht ist, **dadurch gekennzeichnet, dass** die Kopplungseinrichtung ein stiftförmiges Halteelement (33, 34) mit einem Kopf (37, 42) aufweist, das in einem Gegenhalter (36, 360) fixiert ist, wobei zwischen dem Gegenhalter (36, 360) und dem Kopf (37, 42) mindestens ein Element angeordnet ist, das fest mit der Übertragungseinrichtung oder der Stelleinheit (3) verbunden ist, wobei eine zweite Dicke (d) aller Elemente, die zwischen dem Gegenhalter (36, 360) und dem Kopf (37, 42) angeordnet sind, im Falle einer Bewegung der Stelleinheit (3) gegenüber der Übertragungseinrichtung kleiner ist, als eine erste Dicke (D) aller Elemente im Falle, wenn die Stelleinheit (3) gegenüber der Übertragungseinrichtung in ihrer Lage zueinander fixiert sind.

2. Lenksäule nach Anspruch 1, **dadurch gekennzeichnet, dass** die zweiten Dicke (d) kleiner als das 0,9fache der ersten Dicke (D) ist.

3. Lenksäule nach Anspruch 1 oder 2, **dadurch gekennzeichnet, dass** das stiftförmige Halteelement als Niet (33), Bolzen oder Schraube (34) ausgestaltet ist.

4. Lenksäule nach Anspruch 3, **dadurch gekennzeichnet, dass** die Stelleinheit (3) eine Bohrung (35) zur Befestigung des Niets (33) oder eine Gewindebohrung (38) zum Einschrauben der Schraube (34) aufweist.

5. Lenksäule nach Anspruch 4, **dadurch gekennzeichnet, dass** eine gewünschte Vorspannkraft durch ein passendes Anzugsmoment der Schraube (34) erzeugt wird.

6. Lenksäule nach einem der vorhergehenden Ansprüche, **dadurch gekennzeichnet, dass** im Crashfall die Verbindung der Kopplungseinrichtung mit der Stelleinheit aufgehoben wird und die Energieabsorptionsvorrichtung (29) mindestens einen Biegedraht (20) aufweist, dessen erstes Ende (221) mit der Stelleinheit (3) und dessen zweites Ende (201) mit der Kopplungseinrichtung verbunden ist.

7. Lenksäule nach Anspruch 6, **dadurch gekennzeichnet, dass** die Energieabsorptionsvorrichtung (29) einen zweiten Biegedraht (23) aufweist, dessen erstes Ende (223) mit der Stelleinheit (3) und dessen zweites Ende (231) über eine mittels eines pyrotechnischen Schalters (27) lösbare Schaltverbindung (26) mit der Kopplungseinrichtung verbunden ist.

8. Lenksäule nach einem der vorhergehenden Ansprüche, **dadurch gekennzeichnet, dass** der Längsverstellantrieb (8) einen Spindeltrieb mit einer auf einer Spindel (11) axial verschiebbaren Spindelmutter (12) aufweist und dass ein mit der Spindelmutter (12) verbundenes Übertragungselement (13) als Übertragungseinrichtung ausgebildet ist und zusammen mit der Kopplungseinrichtung als einstückiges integrales Bauteil ausgebildet ist.

9. Lenksäule nach einem der vorhergehenden Ansprüche, **dadurch gekennzeichnet, dass** zwischen dem Kopf (37, 42) und dem Gegenhalter (36, 360) eine Scheibe (500, 501) angeordnet ist.

## Claims

1. An adjustable steering column (1) for a motor vehicle, comprising an actuating unit (3) for mounting a steering shaft (2) such that it can be rotated about a longitudinal axis (7), and a carrying unit (4), in which the actuating unit (3) is mounted such that it can be displaced axially in the direction of the longitudinal axis (7) of the steering shaft (2) by means of a motorized longitudinal adjustment drive (8) which is arranged on the carrying unit (4), and comprising, furthermore, a transmission device which is coupled on one side to the actuating unit (3) and is coupled on the other side to the longitudinal adjustment drive (8), an energy absorption apparatus (29) being provided which absorbs energy in the case of a displacement of the actuating unit (3) with respect to the transmission device, a coupling device being provided which is connected to the actuating unit (3) and which is connected to the transmission device, the connection of the coupling device to the actuating unit (3) and/or the transmission device being canceled in the case of a crash, in the case of which a force which exceeds a predefined value acts on the steering shaft (2) in the direction of the longitudinal axis (7), with the result that a movement is made possible between the actuating unit (3) and the transmission device, **characterized in that** the coupling device comprises a pin-shaped holding element (33, 34) with a head (37, 42), which holding element (33, 34) is fixed in a counterholder (36, 360), at least one element which is connected fixedly to the transmission device or the actuating unit (3) being arranged between the counterholder (36, 360) and the head (37, 42), a second thickness (d) of all the elements which are arranged between the counterholder (36, 360) and the head (37, 42) being smaller, in the case of a movement of the actuating unit (3) with respect to the transmission device, than a first thickness (D) of all the elements in the case where the actuating unit (3) is fixed with respect to the transmission device in terms of their position relative to one another.

2. The steering column as claimed in claim 1, **characterized in that** the second thickness (d) is smaller than 0.9 times the first thickness (D).

3. The steering column as claimed in claim 1 or 2, **characterized in that** the pin-shaped holding element is configured as a rivet (33), a bolt or a screw (34).

4. The steering column as claimed in claim 3, **characterized in that** the actuating unit (3) comprises a bore (35) for fastening the rivet (33) or a threaded bore (38) for screwing in the screw (34).

5. The steering column as claimed in claim 4, **characterized in that** a desired prestressing force is generated by way of an appropriate tightening torque of the screw (34).

6. The steering column as claimed in one of the preceding claims, **characterized in that**, in the case of a crash, the connection of the coupling device to the actuating unit is canceled, and the energy absorption apparatus (29) comprises at least one bending wire (20), the first end (221) of which is connected to the actuating unit (3), and the second end (201) of which is connected to the coupling device.

7. The steering column as claimed in claim 6, **characterized in that** the energy absorption apparatus (29) comprises a second bending wire (23), the first end (223) of which is connected to the actuating unit (3), and the second end (231) of which is connected to the coupling device via a switching connection (26) which can be released by means of a pyrotechnic switch (27).

8. The steering column as claimed in one of the preceding claims, **characterized in that** the longitudinal adjustment drive (8) comprises a spindle drive with a spindle nut (12) which can be displaced axially on a spindle (11), and **in that** a transmission element (13) which is connected to the spindle nut (12) is configured as a transmission device and, together with the coupling device, is configured as a single-piece integral component.

9. The steering column as claimed in one of the preceding claims, **characterized in that** a washer (500, 501) is arranged between the head (37, 42) and the counterholder (36, 360).

## Revendications

1. Colonne de direction réglable (1) pour un véhicule automobile, comportant une unité de réglage (3) servant au montage à rotation d'un arbre de direction (2) autour d'un axe longitudinal (7), ainsi qu'une unité de support (4) dans laquelle l'unité de réglage (3) est montée de manière déplaçable axialement dans la direction de l'axe longitudinal (7) de l'arbre de direction (2) au moyen d'un entraînement de réglage longitudinal (8) motorisé disposé sur l'unité de support (4), et comportant en outre un dispositif de transmission qui est accouplé d'une part à l'unité de réglage (3) et d'autre part à l'entraînement de réglage longitudinal (8), un dispositif d'absorption d'énergie (29) étant prévu, lequel absorbe de l'énergie dans le cas d'un déplacement de l'unité de réglage (3) par rapport au dispositif de transmission, un dispositif d'accouplement étant prévu, lequel est relié à l'unité de réglage (3) et lequel est relié au dispositif de transmission, la liaison du dispositif d'accouplement à l'unité de réglage (3) et/ou au dispositif de transmission étant supprimée dans le cas d'une collision lors de laquelle une force agit sur l'arbre de direction (2) dans la direction de l'axe longitudinal (7), laquelle force dépasse une valeur prédéterminée, de sorte qu'un mouvement entre l'unité de réglage (3) et le dispositif de transmission soit rendu possible, **caractérisée en ce que** le dispositif d'accouplement comprend un élément de retenue (33, 34) en forme de goupille doté d'une tête (37, 42) qui est fixée dans un contre-support (36, 360), au moins un élément étant disposé entre le contre-support (36, 360) et la tête (37, 42), lequel élément est relié fixement au dispositif de transmission ou à l'unité de réglage (3), une deuxième épaisseur (d) de tous les éléments qui sont disposés entre le contre-support (36, 360) et la tête (37, 42) étant, dans le cas d'un mouvement de l'unité de réglage (3) par rapport au dispositif de transmission, inférieure à une première épaisseur (D) de tous les éléments dans le cas où l'unité de réglage (3) est fixée en position par rapport au dispositif de transmission.

2. Colonne de direction selon la revendication 1, **caractérisée en ce que** la deuxième épaisseur (d) est inférieure à 0,9 fois la première épaisseur (D).

3. Colonne de direction selon la revendication 1 ou 2, **caractérisée en ce que** l'élément de retenue en forme de goupille est configuré comme rivet (33), boulon ou vis (34) .

4. Colonne de direction selon la revendication 3, **caractérisée en ce que** l'unité de réglage (3) comprend un alésage (35) pour la fixation du rivet (33) ou un alésage fileté (38) pour le vissage de la vis (34).

5. Colonne de direction selon la revendication 4, **caractérisée en ce qu'**une force de précontrainte souhaitée est générée par le biais d'un couple de serrage adapté de la vis (34).

6. Colonne de direction selon l'une des revendications précédentes, **caractérisée en ce qu'**en cas de collision, la liaison du dispositif d'accouplement à l'unité de réglage est supprimée et le dispositif d'absorption d'énergie (29) comprend au moins un fil de flexion (20) dont la première extrémité (221) est reliée à l'unité de réglage (3) et dont la deuxième extrémité (201) est reliée au dispositif d'accouplement.

7. Colonne de direction selon la revendication 6, **caractérisée en ce que** le dispositif d'absorption d'énergie (29) comprend un deuxième fil de flexion (23) dont la première extrémité (223) est reliée à l'unité de réglage (3) et dont la deuxième extrémité (231) est reliée au dispositif d'accouplement par le biais d'une liaison de commutation (26) libérable au moyen d'un commutateur pyrotechnique (27).

8. Colonne de direction selon l'une des revendications précédentes, **caractérisée en ce que** l'entraînement de réglage longitudinal (8) comprend un entraînement à broche doté d'un écrou de broche (12) déplaçable axialement sur une broche (11), et **en ce qu'**un élément de transmission (13) relié à l'écrou de broche (12) est réalisé comme dispositif de transmission et est réalisé comme composant intégré d'une seule pièce conjointement avec le dispositif d'accouplement.

9. Colonne de direction selon l'une des revendications précédentes, **caractérisée en ce qu'**une rondelle (500, 501) est disposée entre la tête (37, 42) et le contre-support (36, 360).
